# EUROPEAN PATENT APPLICATION

(11) **EP 3 061 559 A1**
(43) Date of publication of application: **31.08.2016**
(21) Application number: 16156273.1
(22) Date of filing: 18.02.2016
(51) Int. Cl.: B23K 26/06, B23K 26/70

(54) **FOCUSING APPARATUS FOR A LASER BEAM**

(30) Priority: 20.02.2015 IT PN20150004
(71) Applicant: Possamai, Domenico, 31046 Oderzo (TV) (IT)
(72) Inventor: Possamai, Domenico, 31046 Oderzo (TV) (IT)
(74) Representative: Cercenà, Alice

(57) **Abstract**

The present invention concerns a focusing apparatus (1) for a laser beam for processing metal elements (A), comprising a hollow casing (10) and an optical unit (20) comprising a plurality of lenses (21, 22). Said apparatus (1) also comprises a plurality of containers (30), each tightly closable and adapted to be removably housed within said hollow casing (10), said containers (30) being adapted to contain within them at least one lens (21, 22) of said optical unit (20).

## Description

### TECHNICAL FIELD OF THE INVENTION

The present invention refers to a focusing apparatus for a laser beam for working metal elements, preferably metal sheets.

### BACKGROUND OF THE INVENTION

The use of laser beams is well known in apparatuses employed in industrial processes such as cutting and welding of metal elements, in particular metal sheets.

The laser beam is generated from a light source and transmitted, through carrier means, such as an optical fibre cable and/or mirrors, to the apparatus, which is internally provided with an optical unit, formed by a plurality of integrated or extractable lenses, suitable to focus the laser beam and direct it toward a work zone.

In particular, said apparatus comprises a hollow casing, within which is housed the optical unit, and is provided with a nozzle through which the laser beam, suitably focused and added to an assistance gas, is emitted to reach the work zone.

Said optical unit generally comprises at least, in this order, a collimating lens, suitable to collimate the laser beam, which is generally divergent upon entrance into the apparatus, and a focusing lens, suitable to concentrate the electromagnetic energy of the beam to a point, called focal point, where the work is carried out, so as to have an appropriately localized energy intensity.

In addition, to adjust the focal position with respect to the work zone, said optical unit can be provided with a further plurality of fixed or mobile lenses built into the hollow casing of the apparatus.

The reliability and precision of an apparatus of this type depends largely on the quality of the lenses that make up the optical unit. Very often, such lenses come from highly specialized companies operating in cleanrooms, where dust or particles in the air are prevented from settling on their surface and affecting their quality.

However, the apparatus on which said lenses are installed is clearly used in industrial working environments that are typically saturated with processing dust and waste particles that could penetrate into the casing and settle on the lenses, in particular on the focusing lens, which is localized in proximity of the working zone, contaminating them and consequently degrading the working quality.

Hence, a correct operation of the apparatus requires regular inspections and cleaning of the elements making up the optical unit; this entails the frequent extraction of the lenses from the casing, an operation that - strictly speaking - should be carried out in a cleanroom to avoid the possibility that the dust present in the working environment settles on the lenses and affects their quality.

However, this operation is not at all easy, as it entails having to remove and carry the entire apparatus to a cleanroom and to interrupt the working process. Alternatively, it is necessary to replace the apparatus undergoing maintenance with an identical standby apparatus kept in store, with a consequent increase in costs and tied-up capital.

Another drawback found in the prior-art operating equipment lies in the fact that, for particular processes, it is necessary to provide dedicated lenses for the specific operation to carry out.

In this case, the entire apparatus must be substituted with a different apparatus provided with the specific combination of lenses required for the desired process.

Thus, in this case too, it is necessary to keep in store a plurality of operating devices, each suitable for performing a specific process, and therefore containing an optical unit consisting of a different number of lenses, with a consequent increase in the components in store and thus in the tied-up capital.

### SUMMARY OF THE INVENTION

The main objective of the subject matter of the present invention is to overcome the drawbacks of the prior art specified above, by devising a laser beam focusing apparatus wherein the lenses of the optical unit have a greater protection from the possibility that dust or other particles generated by the process being carried out settle on the lenses and deteriorate the quality of the work.

In the scope of the above objective, one purpose of the present invention is to achieve a laser beam focusing apparatus that makes it possible to carry out various processes without the requirement of changing the whole apparatus, thus guaranteeing a high operating flexibility.

A further objective of the present invention consists of providing an apparatus for focusing a laser beam that makes it possible to easily extract the lenses of the optical unit in order to carry out their cleaning and/or maintenance in a cleanroom.

A still further objective of the present invention is to provide a safe, functional and durable apparatus.

One not negligible purpose is to devise a focusing apparatus that achieves the above objectives and purposes at competitive production costs, so that its use is advantageous also from the economic point of view, and that can be obtained with the usual known plants, machinery and equipment.

The above objective and purposes, as well as others that will become more evident later, are achieved with a laser beam focusing apparatus as defined in claim 1; further characteristics are defined in the subsequent dependent claims.

### BRIEF DESCRIPTION OF THE FIGURES

Advantages and characteristics of the invention will become evident from the description which follows, by way of example and without limitations, with reference to the appended figures, wherein:
- figure 1 illustrates, in a perspective view, a laser beam focusing apparatus according to the present invention;
- figure 2, illustrates in a schematic cross sectional view, the focusing apparatus of figure 1;
- figure 3 illustrates, in a view along cross section III-III of figure 2, a component element of the apparatus according to the present invention, and
- figure 4 is a view of the cross section IV-IV of the component element shown in figure 3.

### DETAILED DESCRIPTION OF THE EMBODIMENTS OF THE INVENTION

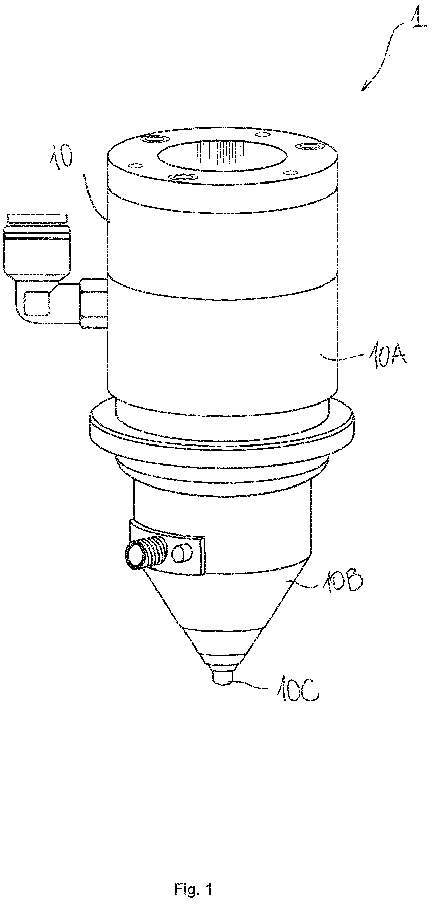

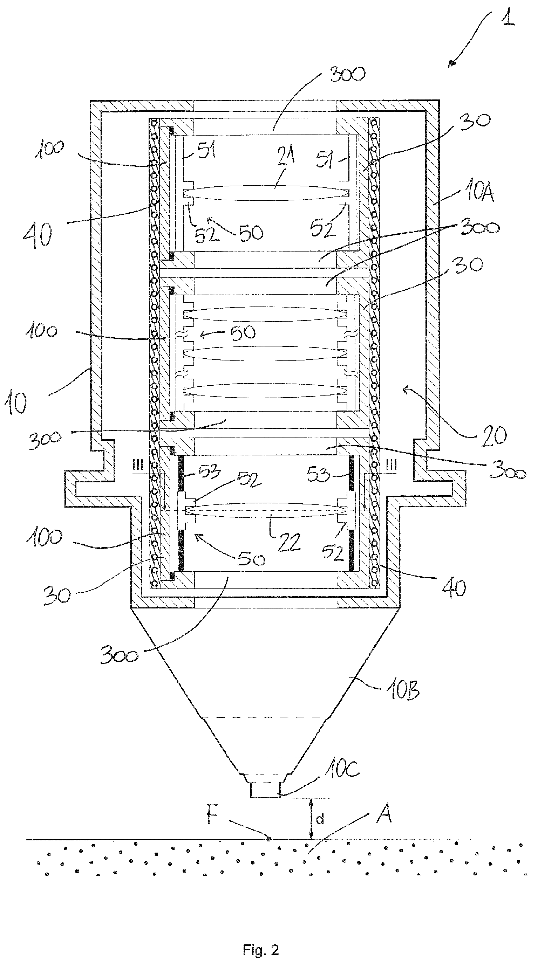

With reference to the previously mentioned figures, in particular in figures 1 and 2, is shown a laser beam focusing apparatus 1 according to the present invention.

In the description which follows, terms such as "above", "below", "higher", "lower", "high", "low" or similar ones refer to a focusing apparatus 1 in its normal operating order, that is, in actual use, as shown schematically in the enclosed figures. Clearly, a focusing apparatus is also provided with numerous other known means and devices that, not being directly relevant for the purposes of the present invention, have been omitted from the figures and will not be described in detail.

Said apparatus 1 is suitable to be installed in a conventional manner in a plant for the industrial processing of metal elements, preferably metal sheets, and is suitable for carrying out laser processes such as cutting, welding or similar procedures.

Said apparatus 1 is optically connectable to a source of laser radiations, preferably having a power of at least 1kW, through suitable power transmission means, such as for example an optical fibre cable or a plurality of mirrors, to receive the laser beam generated by the source and direct it, appropriately focused, toward a focal point F placed near or at a work zone A of the metal element to be processed.

In the specific instance, said apparatus 1 comprises a hollow casing 10, made for example of aluminium, and preferably consisting of a cylindrical portion 10A connected at the bottom to a substantially conical portion 10B, at the end of which is provided a nozzle 10C where an assistance gas is added to the focused laser beam to perform the work.

Within said hollow casing 10, in particular at said cylindrical portion 10A, is provided an optical unit 20, comprising a plurality of lenses, and preferably at least one collimating lens 21 and a focusing lens 22, both arranged along the optical path of the laser beam; said collimating lens 21 has the function of receiving the beam of diverging laser rays on entrance to the apparatus 1, that is, at the summit of said cylindrical portion 10A, and of transmitting it in the form of a beam having substantially parallel rays; subsequently, said rays are received by the focusing lens 22, which focuses them and concentrates them toward the focal point F.

According to a rather advantageous characteristic of the present invention, said apparatus 1 also comprises a plurality of containers 30, tightly sealable and adapted to be removably housed within said hollow casing 10, each of said containers 30 being adapted to contain at least one lens of said optical unit 20.

According to the embodiment of the invention illustrated in figure 2, said collimating lens 21 and said focusing lens 22 of the optical unit 20 are advantageously arranged each in a respective container of said plurality of containers 30.

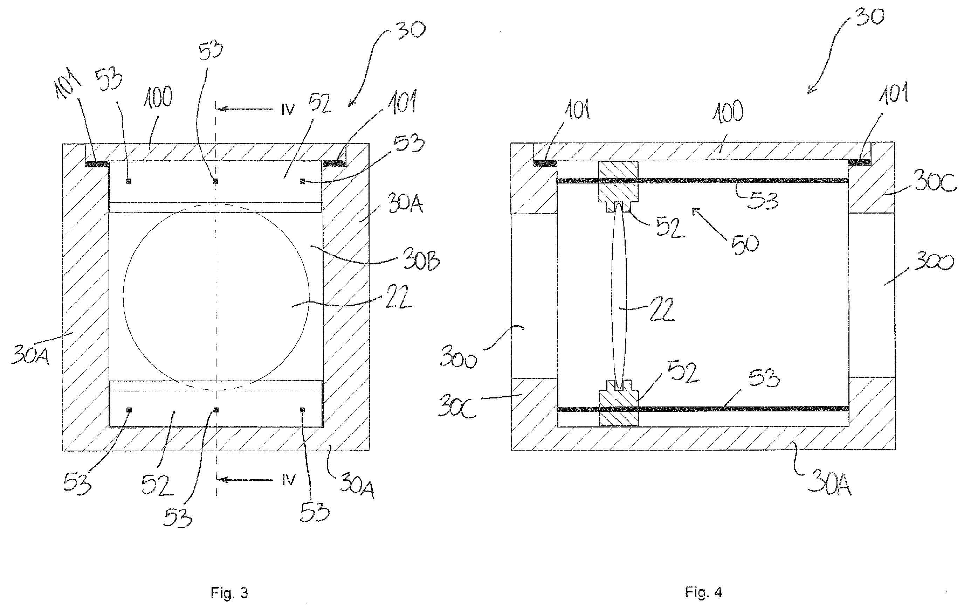

Figures 3 and 4 illustrate by way of example a container 30 within which is housed said focusing lens 22; obviously, it is understood that, unless specified otherwise, the other containers 30 are also made in the manner described below.

Each of said plurality of containers 30 comprises a body formed by side containing walls 30A, defining an internal cavity 30B, within which are housed one or more lenses of the optical unit 20, and a pair of closing walls 30C, arranged substantially perpendicular to the incoming laser beam.

Advantageously, on said two closing walls 30C are obtained corresponding through openings, suitable to allow the passage of said laser rays, advantageously tightly closed thanks to the application of flat elements 300 advantageously made of a material transparent to the laser beams, such as for example high performance quartz plates.

At least one wall 100, or a wall portion of the walls 30A, 30C forming the body of the container 30 is advantageously removable to enable access to the cavity 30B and thus allow the inspection or extraction of the lens, or plurality of lenses, housed therein, which operation is to be carried out preferably in a cleanroom.

Preferably, said removable wall, or portion of wall 100 is associable to the body of the container 30 so as to hermetically close said internal cavity 30B, for example through the interposition of sealing elements 101, such as suitable gaskets. In this manner, even during their use, the lenses housed in the containers 30 are contained in an environment that is substantially free of processing dust and waste particles.

Advantageously, said lenses are mounted on corresponding support means 50 arranged within the respective containers 30.

As will be explained later in greater detail, depending on the function of the lenses housed in the respective container 30, said support means 50 can be rigid, that is formed by lateral uprights 51 on which are fixedly mounted retaining means 52 for said lenses, which therefore will be static and unable to change their position within the container 30; support means 50 of this type are for example illustrated in figure 2 with reference to the collimating lens 21, which is generally designed to be static within the apparatus 1, as it is not necessary to vary its position.

In other cases, said support means 50 can include a plurality of rectilinear and parallel guides 53, on which said lens retaining means 52 are mounted, so as to allow a translation of the lens.

Advantageously, said retaining means 52 are operatively connectable to suitable displacement means, such as for example an electric motor, actuated by the operator through control means, preferably positioned outside the apparatus 1.

If necessary, since said containers 30 must be, when in use, tightly closed, it is inadvisable to make any holes or openings in the holding walls to allow the passage of feeding cables; thus, said displacement means can include a toroid arranged externally to the body of the container 30, while said retaining means 52 and/or said guides 53 can be made of ferromagnetic material.

In this case, preferably, the containing walls 30A of said container 30 will be suitably made of a non-ferromagnetic material; further, advantageously, said actuating means include a linear encoder that makes it possible to sense the position of the lens.

Support means 50 of this type are illustrated in figure 2 and in figures 3 and 4 with reference to said focusing lens 22; in fact, it is advantageously designed to be movable, so as to able to vary proportionately the position/depth of the focal point F with respect to the work zone A, without having to vary the distance d between the latter and the nozzle 10C of the apparatus 1.

Preferably, in order to prevent the possibility that the lenses that make up the optical unit 20 overheat abnormally due to the passage of the high power laser beam, cooling means 40 can be provided within said apparatus 1.

Advantageously, said cooling means 40 can include one or more plates to which are associated, for example by welding, ducts for the passage of a cooling fluid, for example water or air; said plates 40 are preferably integrally mounted within said casing 10 and associated externally to said containers 30 so as to be advantageously in contact with their external surface; in this case, the side walls 30A of said container 30 will have to be made with a thermally conductive material, as will also be the case with the means of support 50 of the lenses, which will in turn be arranged advantageously in thermal connection with the containing walls 30A of said container 30.

As already mentioned, said containers 30 are advantageously extractable from said hollow casing 10, for example through a side door obtained on said cylindrical portion 10A, or through an opening provided at the top of the same.

If necessary, to carry out particular processes on the metal element, in addition to said collimating lens 21 and said focusing lens 22, said optical unit 20 may include a further plurality of lenses, housed in one or more containers 30 of the type described above. Such further lenses can also be fixedly or slidably mounted through support means 50, and can be cooled through said cooling means 40.

In conclusion, it is evident from the above how a laser beam focusing apparatus according to the present invention achieves the initially foreseen purposes and advantages.

In fact, thanks to the provision of containers 30 that are removable from the casing 10 and that can be hermetically sealed, the lenses forming the optical unit 20 are more protected from the possibility of dust or other process particles settling on them, and deteriorating the quality of the work process.

Moreover, a focusing apparatus 1 for a laser beam according to the present invention is quite flexible to use since it offers the possibility of performing various processes by inserting each time inside the hollow casing 10 the containers 30 within which are housed the lenses necessary for the specific work process, without therefore having to substitute the whole apparatus.

Finally, a laser beam focusing apparatus 1 according to the present invention makes it possible to keep the lenses in a dust-free environment even during its transportation to a cleanroom where maintenance and cleaning of the lenses can be carried out, without having to remove the whole apparatus or without having to extract the lenses in an environment contaminated by dust and particles.

Naturally, the present invention is susceptible to numerous applications, modifications or variants without thereby departing from the scope of patent protection, as defined by the appended claims.

Moreover, the materials and equipment used to implement the present invention, as well as the shapes and dimension of the individual components, may be the most suitable to meet the specific requirements.

## Claims

1. Focusing apparatus (1) of a laser beam for working metal elements, said apparatus (1) comprising:
- a hollow casing (10), and
- an optical unit (20) comprising a plurality of lenses,
**characterized in that** it further comprises a plurality of containers (30) each tightly closable and adapted to be removably housed within said hollow casing (10), each of said plurality of containers (30) being adapted to contain at least one lens of said optical unit (20).

2. Focusing apparatus (1) according to claim 1, wherein said optical unit (20) comprises at least one collimating lens (21) and one focusing lens (22), each being arranged in a corresponding container of said plurality of containers (30).

3. Focusing apparatus (1) according to claim 1 or 2, wherein each container of said plurality of containers (30) comprises a body formed by side containing walls (30A) defining an internal cavity (30B) for said at least one lens, and a pair of closing walls (30C), arranged substantially perpendicular to the optical path of the laser beam and provided with through openings, flat elements (300) made of a transparent material for the laser beam being associable with said through openings so as to seal said internal cavity (30B).

4. Focusing apparatus (1) according to claim 3, wherein at least one wall portion (100) of said walls (30A, 30C) forming the body of said container (30) is adapted to be removably associated with said body to allow the access to said internal cavity (30B).

5. Focusing apparatus (1) according to claim 4, wherein said at least one wall portion (100) being associable with the corrisponding container (30) through a sealing element (101) so as to seal said internal cavity (30B).

6. Focusing apparatus (1) according to any of the preceding claims, wherein each of said plurality of containers (30) comprises support means (50) for said at least one lens arranged in it.

7. Focusing apparatus (1) according to claim 6, wherein at least one container of said plurality of container (30) comprises support means (50) comprising uprights (51) whereon retaining means (52) of said at least one lens are fixedly mounted.

8. Focusing apparatus (1) according to claim 6, wherein at least one container of said plurality of container (30) comprises support means (50) comprising linear and parallel guides (53), whereon retaining means (52) of said at least one lens are slidably mounted, said focusing apparatus (1) further comprising displacement means operatively connectable to said retaining means (52) and adapted to be actuated through control means.

9. Focusing apparatus (1) according to claim 8, wherein said displacement means includes a toroid arranged externally to the body of the container (30) having the containing walls (30A) made of a non-ferromagnetic material, said retaining means (52) and/or said guides (53) being made of ferromagnetic material.

10. Focusing apparatus (1) according to claim 9, wherein said displacement means further comprises a linear encoder adapted to sense the position of said lens.

11. Focusing apparatus (1) according to any of claims 6 to 10, further comprising cooling means (40) for said plurality of lenses.

12. Focusing apparatus (1) according to claim 11, wherein said cooling means (40) comprises at least a plate whereon ducts for a cooling fluid are provided, said at least a plate being mounted inside of said hollow casing (10) and in contact against said containers (30), said containers (30) and said support means (50) being made of thermal conductive material and being arranged so as to be thermally connected to said cooling means (40).
